# EUROPÄISCHE PATENTSCHRIFT

(11) **EP 1 060 923 B1**
(45) Veröffentlichungstag und Bekanntmachung des Hinweises auf die Patenterteilung: **10.01.2007**
(21) Anmeldenummer: 00112517.8
(22) Anmeldetag: 13.06.2000
(51) Int. Cl.: B60J 7/06

(54) **Fahrzeugdach**
Vehicle roof
Toit de véhicule

(30) Priorität: 15.06.1999 DE 19927237
(43) Veröffentlichungstag der Anmeldung: 20.12.2000
(73) Patentinhaber: Webasto Vehicle Systems International GmbH, 82131 Stockdorf (DE)
(72) Erfinder: Mayer, Johann, 85238 Petershausen (DE)
(74) Vertreter: Wiese, Gerhard

(56) Entgegenhaltungen:
- EP-A- 0 753 451
- DE-A- 3 942 746
- DE-A- 19 731 330

## Beschreibung

Die Erfindung bezieht sich auf ein Fahrzeugdach mit wenigstens einem von einem Antriebsmotor betätigbaren öffnungsfähigen Dachteil und wenigstens einem zeitweise feststehenden Dachteil, welches das öffnungsfähige Dachteil in dessen Öffnungsstellung lagert.

Bei einem derartigen, aus der DE 42 03 229 C2 bekannten Fahrzeugdach ist das öffnungsfähige Dachteil während der Fahrt in Führungen von Seitenholmen in Fahrzeuglängsrichtung in beliebige Öffnungspositionen verfahrbar, wobei die Seitenholme an einem hinteren Dachteil als zeitweise feststehendem Dachteil schwenkbar angelenkt, mit einem vorderen oberhalb der Windschutzscheibe verlaufenden vorderen Querträger lösbar verbunden und nach Entriegelung von dem vorderen Querträger an das hintere Dachteil anschwenkbar sind. Das komplette Fahrzeugdach inklusive einer mit dem hinteren Dachteil verbundenen Heckscheibe ist zur Freigabe einer cabrioartigen Dachöffnung in einen Stauraum im hinteren Teil des Fahrzeugs mittels einer aufwendigen Mechanik absenkbar, die mehrere Antriebe umfasst. Im vorderen Querträger ist ein elektrischer Antrieb angeordnet, der die Entriegelung der Seitenholme von dem Querträger bewirkt, ein zweiter elektrischer Antrieb im hinteren Dachteil übernimmt die Verschiebung des öffnungsfähigen Dachteils und ein weiterer, ebenfalls im Bereich des hinteren Dachteils angebrachter elektrischer Antrieb dient der Verschwenkung der Seitenholme. Ferner ist ein Hydraulikzylinder im Bereich der hinteren Fahrzeugseitenwände vorhanden, der für eine Verschwenkung des hinteren Dachteils zusammen mit dem vom hinteren Dachteil aufgenommenen öffnungsfähigen Dachteil, der an das hintere Dachteil angeschwenkten Seitenholme sowie hinterer Säulen (C-Säulen), auf denen das hintere Dachteil beidseitig ruht, sorgt.

DE 39 42 746A offenbart ein Fahrzeugdach gemäß dem Oberbegriff des Anspruchs 1.

Der im Anspruch 1 angegebenen Erfindung liegt die Aufgabe zugrunde, ein Fahrzeugdach der eingangs genannten Art zu schaffen, das ohne eine aufwendige Betätigungsmechanik auskommt, auf komfortable Weise zu bedienen und universell einsetzbar ist.

Diese Aufgabe wird bei einem Fahrzeugdach mit den Merkmalen des Oberbegriffs des Anspruchs 1 dadurch gelöst, dass der Antriebsmotor eine Verriegelung und/oder eine Entriegelung des zeitweise feststehenden Dachteils mit Bezug auf ein zumindest zeitweise feststehendes Dachteil betätigt. Vorteilhafte Weiterbildungen der Erfindung sind Gegenstand der Unteransprüche.

Durch Verwendung des ohnehin für die Öffnungs- und Schließbewegung des öffnungsfähigen Dachteils notwendigen Antriebsmotors auch für die Verriegelung und/oder Entriegelung des zeitweise feststehenden Dachteils mit Bezug auf das zumindest zeitweise feststehende Dachteil wird die Komplexität des Fahrzeugdachs unter Beibehaltung seiner Funktionalität verringert.

Bei dem zeitweise feststehende Dachteil handelt es sich vorzugsweise um ein hinteres Dachteil und bei dem zumindest zeitweise feststehende Dachteil insbesondere um seitliche hintere Säulen (B- oder C-Säulen) des Fahrzeugs.

Zur Erhöhung der Betriebssicherheit des Fahrzeugdachs kann das öffnungsfähige Dachteil in Öffnungsstellung im zeitweise feststehenden Dachteil arretierbar sein, wobei die Arretierung des öffnungsfähigen Dachteils im zeitweise feststehenden Dachteil bevorzugt vom Antriebsmotor betätigt wird.

Der konstruktive Aufwand des Fahrzeugdachs lässt sich gering halten, wenn der Antriebsmotor am zeitweise feststehenden Dachteil festgelegt ist.

In weiterer Ausgestaltung der Erfindung ist das hintere Dachteil als zeitweise feststehendes Dachteil nach seiner Entriegelung vom zumindest zeitweise feststehenden Dachteil, insbesondere nach Entriegelung von den hinteren Säulen (B- oder C-Säulen), absenkbar. Dabei kann das hintere Dachteil mittels einer Viergelenkanordnung abgesenkt werden, und zwar bevorzugt soweit, dass eine Oberseite des hinteren Dachteils etwa in Höhe der Gürtelline des Fahrzeugs zu liegen kommt.

Alternativ zu oder in Kombination mit der Möglichkeit der Absekung des zeitweise feststehenden Dachteils kann auch vorgesehen sein, das zeitweise feststehende Dachteil nach seiner Entriegelung vom zumindest zeitweise feststehenden Dachteil vollständig von dem Fahrzeug abzunehmen.

Sind auch die hinteren Säulen des Fahrzeugs absenkbar ausgebildet, kann eine cabrioartige Dachöffnung ohne die Gürtellinie nach oben überragende Karosserieteile im Heckbereich des Fahrzeugs freigegeben werden. Zur Erhöhung der Sicherheit lässt sich ein automatisches Ausfahren der hinteren Säulen vorsehen, sobald eine elektronische Überwachungseinrichtung einen drohendem Überschlag des Fahrzeugs registriert.

Der Antriebsmotor, der zur Betätigung der Öffnungs- und Schließbewegung des öffnungsfähigen Dachteils sowie zur Betätigung der Verriegelung und/oder Entriegelung des zeitweise feststehenden Dachteils mit Bezug auf das zumindest zeitweise feststehende Dachteil verwendet wird, kann auch zur Betätigung einer Arretierung des hinteren Dachteils in abgesenkter Position und/oder einer Freigabe desselben aus der abgesenkten Position eingesetzt werden. Insbesondere betätigt der Antriebsmotor eine Verschlussvorrichtung, die vorzugsweise am zeitweise feststehenden Dachteil festgelegt ist und nicht nur der Verriegelung/Entriegelung des zeitweise feststehenden Dachteils mit Bezug auf das zumindest zeitweise feststehende Dachteil, sondern auch mit Bezug beispielsweise auf die die Absenkbewegung des zeitweise feststehenden Dachteils steuernde Viergelenkanordnung dient. Zu diesem Zweck kann an dem zumindest zeitweise feststehenden Dachteil und an der Viergelenkanordnung ein Gegenlager angordnet sein, welches mit der Verschlussvorrichtung wechselwirkt.

An dem hinteren Dachteil kann ein Heckteil des Fahrzeugs festgelegt sein, welches eine Heckscheibe umfasst. Ist das hintere Dachteil absenkbar ausgebildet, so besteht die Heckscheibe vorzugsweise aus einem faltbaren Kunststoffmaterial.

Ist eine Unterseite des am hinteren Dachteil festgelegten Heckteils des Fahrzeugs an eine Hecktür des Fahrzeugs anlegbar sowie nach oben klappbar, lässt sich insbesondere die Zugänglichkeit zu einem im Bereich des Fahrzeughecks gelegenen Stauraum verbessern.

Zweckmäßig erstrecken sich zwischen dem hinteren Dachteil und dem oberhalb der Windschutzscheibe verlaufenden vorderen Querträger zu beiden Seiten des öffnungsfähigen Dachteils Seitenholme, die Führungen umfassen, in denen das öffnungsfähige Dachteil zwischen seiner Öffnungsstellung und seiner Schließstellung zumindest zum Teil verschiebbar aufgenommen ist, wobei die Seitenholme bevorzugt lösbar mit dem vorderen Querträger und den seitlichen hinteren Säulen des Fahrzeugs verbunden sind. Dabei ist es von Vorteil, die Führungen der Seitenholme bei Verriegelung des hinteren Dachteils an dem zumindest zeitweise feststehenden Dachteil in Fluchtung mit Führungen zu bringen, die im hinteren Dachteil zur verschiebbaren Aufnahme und Lagerung des öffnungsfähigen Dachteils in Öffnungsstellung festgelegt sind.

Bei dem öffnungsfähigen Dachteil kann es sich um ein während der Fahrt öffnungsfähiges Dachteil wie ein Faltdach oder ein Lamellendach prinzipiell bekannter Art handeln. Es versteht sich, dass im Rahmen der vorliegenden Erfindung als öffnungsfähiges Dachteil auch ein Schiebedach oder Schiebehebedach mit einem oder mehreren Deckeln, vorzugsweise mit zwei Deckeln, eingesetzt werden kann.

Nachfolgend sind vorteilhafte Ausführungsformen des Erfindungsgegenstandes anhand der Zeichnungen näher erläutert.

Es zeigt:
- Fig. 1: eine perspektivische Darstellung eines Fahrzeugs mit einem als Dachkassette ausgebildeten, zeitweise feststehenden Dachteil und einem Faltdach als öffnungsfähigem Dachteil, wobei die Dachkassette mittels einer Verschlussvorrichtung an einem an einer B-Säule des Fahrzeugs befestigten Gegenlager festgelegt ist und das Faltdach sich in seiner geschlossenen Position befindet;
- Fig. 2: eine perspektivische Darstellung des Fahrzeugs der Fig. 1 mit sich in Öffnungsstellung befindendem Faltdach;
- Fig. 3: eine perspektivische Darstellung des Fahrzeugs der Fig. 1, wobei die Dachkassette mitsamt dem sich in Öffnungsstellung befindendem Faltdach in eine Ablageposition abgesenkt ist;
- Fig. 4: eine perspektivische Darstellung des Fahrzeugs der Fig. 1, bei dem aus Übersichtlichkeitsgründen die Dachkassette nicht dargestellt ist, wobei der Ausbau von Seitenholmen veranschaulicht wird, die sich zwischen den B-Säulen und einem vorderen, oberhalb der Windschutzscheibe verlaufenden Querträger erstrecken;
- Fig. 5: eine perspektivische Darstellung des Fahrzeugs der Fig. 1 mit ausgebauten Seitenholmen und abgesenkter Dachkassette;
- Fig. 6: eine perspektivische Darstellung des Fahrzeugs der Fig. 1 mit geschlossenem Faltdach, wobei eine Unterseite eines die Heckscheibe des Fahrzeugs umfassenden Heckteils von einer Hecktür des Fahrzeugs abgekoppelt und nach oben geschwenkt ist, und sich die Hecktür des Fahrzeugs in geöffneter Position befindet;
- Fig. 7: eine perspektivische Darstellung der Verschlussvorrichtung der Dachkassette, wobei sich ein Verriegelungshaken der Verschlussvorrichtung in seiner hinteren Rastposition in Verriegelungsstellung befindet;
- Fig. 8: eine Explosionsdarstellung der Verschlussvorrichtung der Fig. 7;
- Fig. 9: eine Seitenansicht in Richtung auf eine Lagerplatte der Verschlussvorrichtung der Fig. 7;
- Fig. 10: eine Seitenansicht in Richtung auf eine Führungsschiene der Verschlussvorrichtung der Fig. 7;
- Fig. 11: den schematischen Teilschnitt entlang der Linie XI-XI der Fig. 7, der in Prinzipdarstellung die Riegelsteinankopplungen eines motorisch verschiebbaren Mitnahmegleiters an einen die Bewegung des Verriegelungshakens der Verschlussvorrichtung steuernden Kulissenkörper sowie an einen Dachspitzengleiter des Faltdachs veranschaulicht;
- Fig. 12: eine perspektivische Darstellung einer abgewandelten Ausführungsform einer Verschlussvorrichtung, wobei sich ein Verriegelungshaken derselben in seiner hinteren Rastposition in Verriegelungsstellung befindet; und
- Fig. 13: ein Prinzipschaltbild einer Steuerung für das Fahrzeugdach.

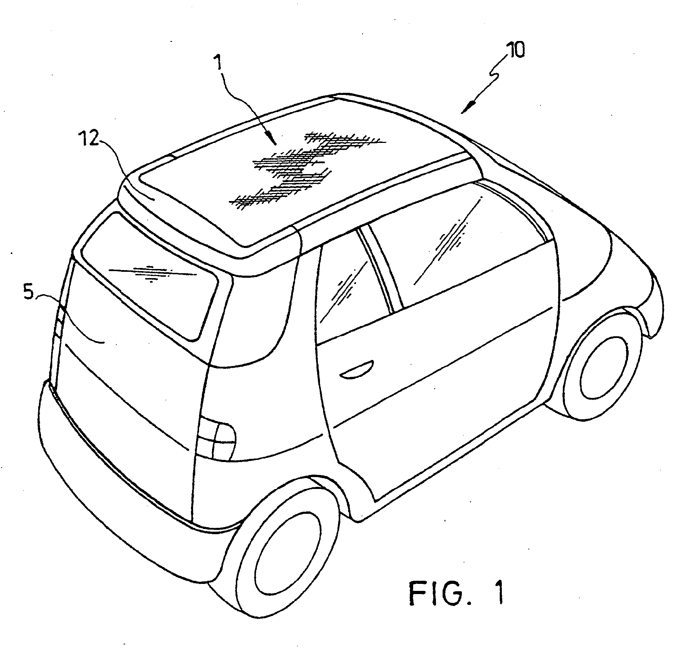

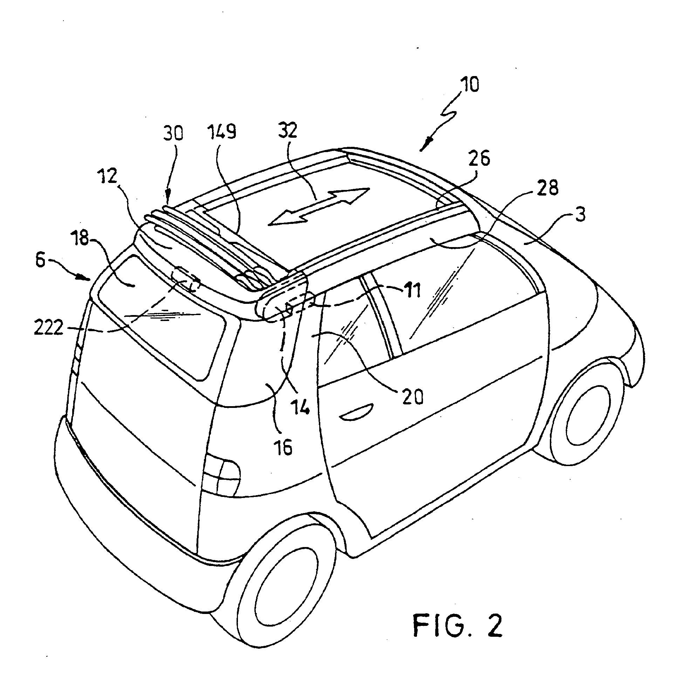

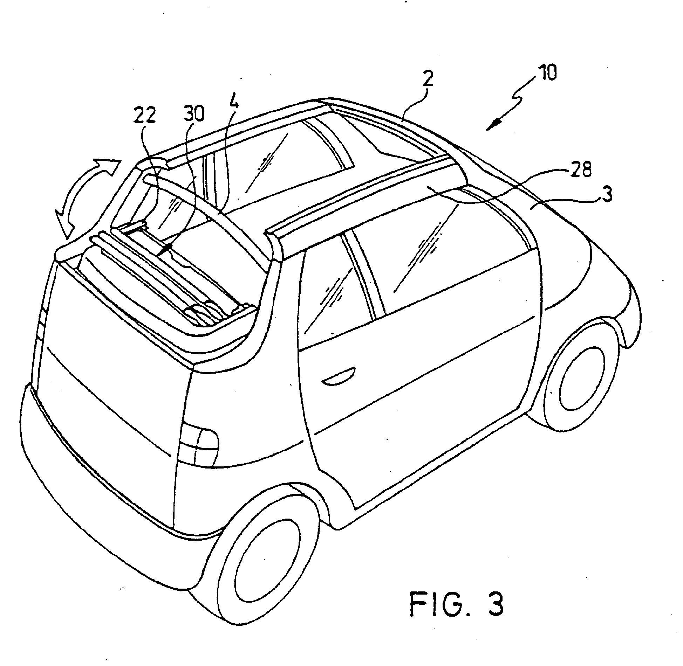

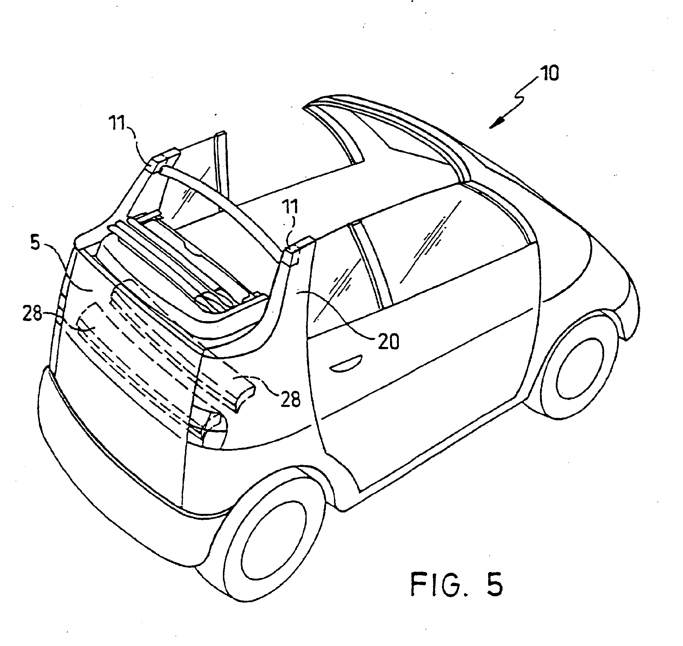

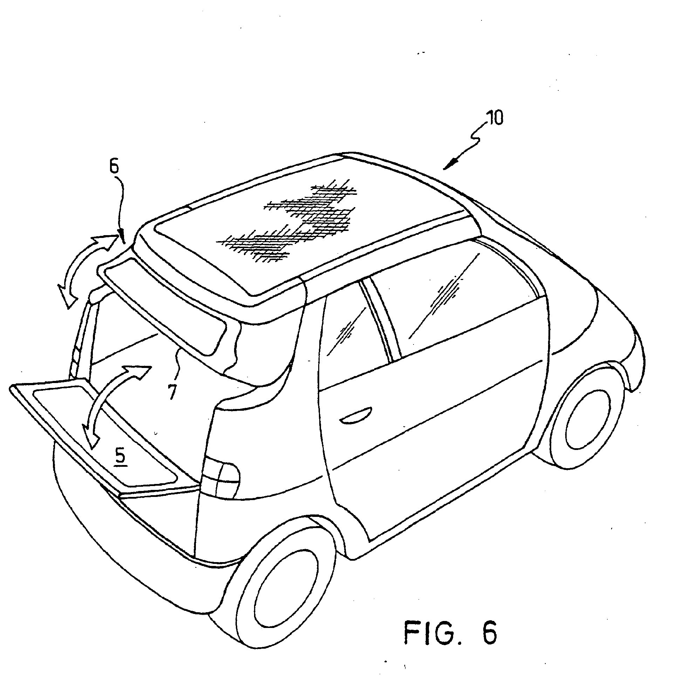

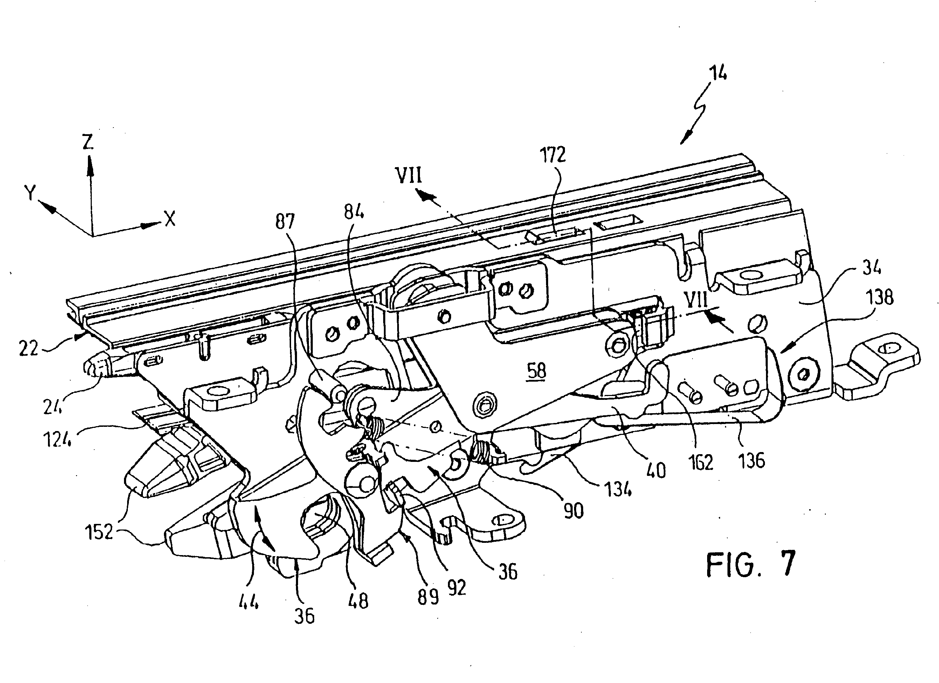

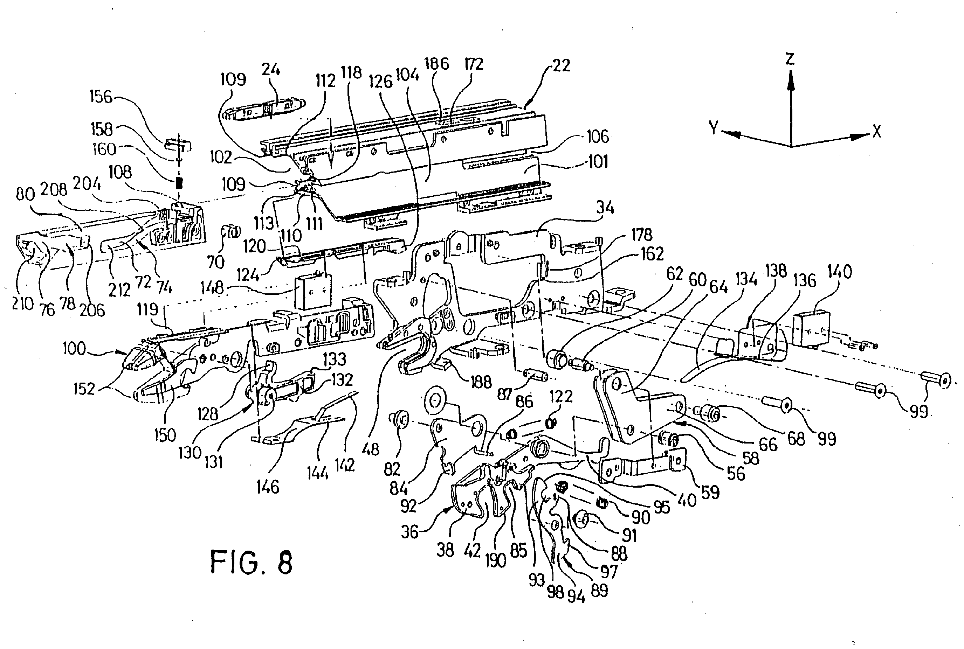

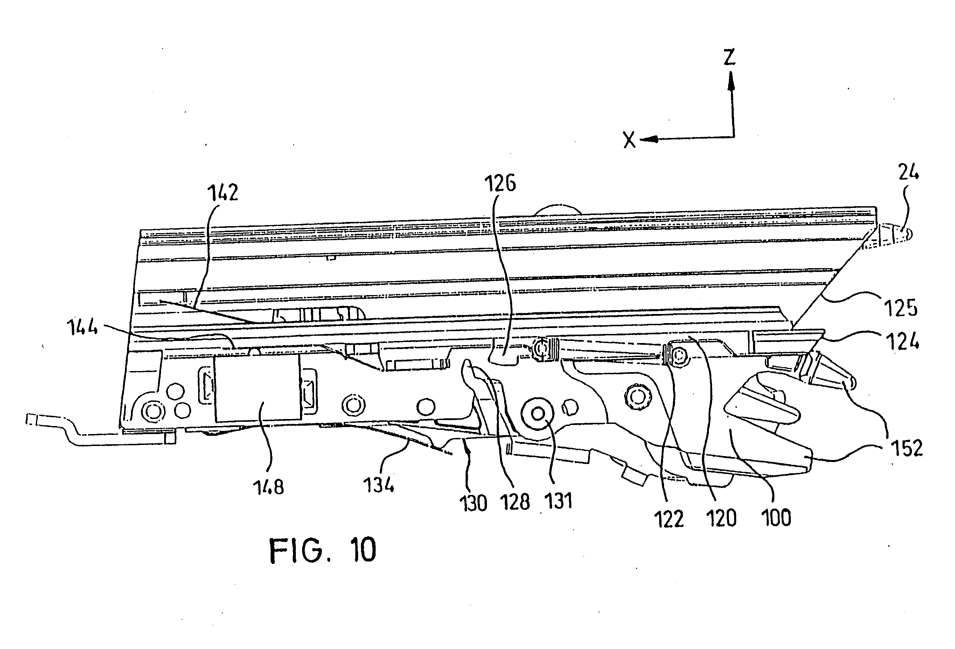

In den Fign. 1 bis 6 ist ein Fahrzeug 10 mit einem Fahrzeugdach 1 gezeigt, welches ein von einem als Elektromotor 222 ausgebildeten Antriebsmotor betätigbares öffnungsfähiges Dachteil, ein zeitweise feststehendes Dachteil, ein zumindest zeitweise feststehendes Dachteil, ein Heckteil 6 sowie Seitenholme 28 umfasst. Dabei ist das öffnungsfähige Dachteil ein Faltdach 30, welches in Führungen des zeitweise feststehenden Dachteils sowie in solchen der Seitenholme 28 in Öffnungs- bzw. Schließrichtung 32 verschiebbar aufgenommen und in beliebige Zwischenstellungen zwischen seiner Öffnungsstellung (vgl. Fign. 2, 3 und 5) und seiner Schließstellung (siehe Fign. 1 und 6) bringbar ist. In Öffnungsstellung ist das Faltdach 30 in dem zeitweise feststehenden Dachteil, welches in dem veranschaulichten Ausführungsbeispiel ein als Dachkassette 12 ausgebildetes hinteres Dachteil des Fahrzeugdachs 1 ist, gelagert, wobei alle in den Führungen verschiebbaren Teile des Faltdachs 30 in den in der Dachkassette 12 angeordneten Führungen aufgenommen und mit Bezug auf die Dachkassette 12 arretierbar sind, wie dies weiter unten im Zusammenhang mit den Fign. 7 bis 12 näher erläutert wird. Dabei ist das Faltdach 30 in Öffnungsstellung soweit nach hinten in Öffnungsrichtung 32 verschoben, dass seine Dachspitze 149 im Wesentlichen bündig mit einer Vorderkante der Dachkassette 12 abschließt.

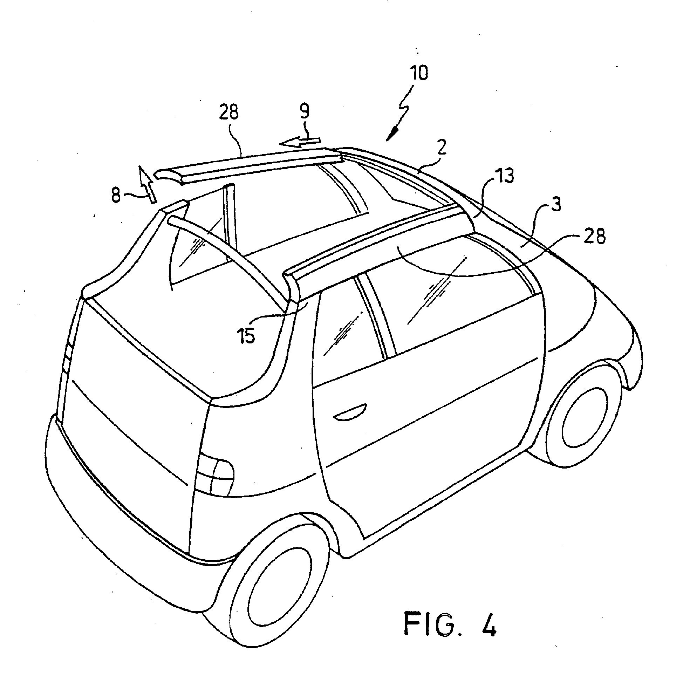

Die in der Dachkassette 12 angeordneten Führungen werden von Führungsschienenabschnitten 22 gebildet, die an Verschlussvorrichtungen 14 angebracht sind, welche ihrerseits an der Dachkassette 12 festgelegt sind, wobei die Führungsschienenabschnitte 22 mit vorderen Führungsschienenabschnitten 26 in Fluchtung stehen, wenn die Dachkassette 12 mit Bezug auf das zumindest zeitweise feststehende Dachteil verriegelt ist. Die vorderen Führungsschienenabschnitte 26 bilden die in den Seitenholmen 28 vorhandenen Führungen und sind schwimmend in den Seitenholmen 28 aufgenommen. Die Seitenholme 28 sind lösbar mit dem Fahrzeug 10 verbunden, wozu im Bereich der Stoßstelle zwischen einem vorderen, oberhalb der Windschutzscheibe verlaufenden Querträger 2 und vorderen seitlichen Säulen (A-Säulen 3) vordere Seitenholmlager 13 sowie im Bereich des oberen Endes von ein zumindestens zeitweise feststehendes weiteres Dachteil bildenden hinteren Säulen (B-Säulen 20) hintere Seitenholmlager 15 vorgesehen sind. Zum Ausbau der Seitenholme 28 werden, wie dies in Fig. 4 zu erkennen ist, zunächst die hinteren Seitenholmlager 15 entriegelt, die Seitenholme 28 an ihrem hinteren Ende in Richtung des Pfeils 8 angehoben und dann in Richtung des Pfeils 9 nach hinten aus den vorderen Seitenholmlagern 13 herausgezogen. Die ausgebauten Seitenholme 28 lassen sich im Fahrzeug 10 in entsprechenden Aufnahmevorrichtungen, beispielsweise in einer Hecktür 5, ablegen.

In der Ausführungsform des Fahrzeugdachs 1 nach den Fign. 1 bis 6 bilden die hinteren seitlichen Säulen, d.h. die B-Säulen 20, das zumindest zeitweise feststehende Dachteil. Zwischen den starr mit der Fahrzeugkarosserie verbundenen B-Säulen 20 kann sich in der Art eines Überrollbügels ein hinterer Querträger 4 erstrecken. Alternativ zur starren Anordnung der B-Säulen 20 können diese auch nach unten absenkbar ausgebildet sein. Je eine Verschlussvorrichtung 14 ist an der in Fahrtrichtung linken und rechten Seite der Dachkassette 12 angebracht und wechselwirkt mit einem Gegenlager 11, welches nahe einem oberen Ende jeder der B-Säulen 20 festgelegt ist, um die über den Elektromotor 222 betätigbare Verriegelung und Entriegelung der Dachkassette 12 mit Bezug auf die B-Säulen 20 zu bewirken.

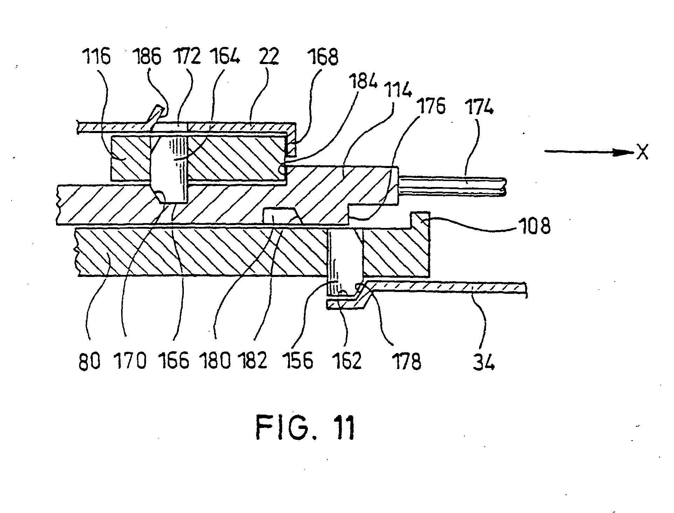

Die Betätigung sowohl der Verriegelung und Entriegelung der Dachkassette 12 mit Bezug auf die Gegenlager 11 als auch die Betätigung der Öffnungs- und Schließbewegung des Faltdachs 30 wird letztendlich von einem Mitnahmegleiter 114 bewirkt, der über ein drucksteifes Kabel 174 vom dem im mittleren hinteren Bereich der Dachkassette 12 angeordneten Elektromotor 222 bewegt wird, und dessen Funktionsweise ausführlich weiter unten insbesondere unter Bezugnahme auf Fig. 11 erläutert wird.

Das Heckteil 6 des Fahrzeugdachs 1 ist an der Dachkassette 12 festgelegt und umfasst eine Heckscheibe 18 aus faltbarem Kunststoffmaterial sowie ebenfalls faltbare Seitenteile 16. Die Dachkassette 12 ist über eine nicht gezeigte Viergelenkanordnung mit der Fahrzeugkarosserie verbunden und nach Entriegelung von dem Gegenlager 11 der B-Säulen 20 soweit absenkbar, dass eine Oberseite der Dachkassette 12 im Wesentlichen auf der Höhe der Fahrzeuggürtellinie zu liegen kommt. Um die Dachkassette 12 in abgesenkter Position zu arretieren, ist an der Viergelenkanordnung selbst ebenfalls ein Gegenlager vorgesehen, mit dem die Verschlussvorrichtung 14 in ähnlicher Weise wie mit dem Gegenlager 11 wechselwirkt. Eine Unterseite 7 des Heckteils 6 ist an eine Hecktür 5 anlegbar und kann, wie dies in Fig. 6 gezeigt ist, nach oben geklappt werden, um den Zugang zu einem im Fahrzeugheck gelegenen Stauraum zu verbessern. Die Hecktür 5 ihrerseits ist mit ihrer Unterseite schwenkbar mit der Fahrzeugkarosserie verbunden und kann unabhängig von der Position, welche die Unterseite 7 des Heckteils 6 einnimmt sowie auch bei abgesenkter Dachkassette 12 nach hinten geklappt werden. Zur Erhöhung der Stabilität des Heckteils und zur Anbringung einer Schlossfalle für die Hecktür 5 kann an der Unterseite 7 des Heckteils 6 ein Querträger angeordnet sein.

Nachfolgend werden anhand der Fign. 7 bis 12 zwei Ausführungsbeispiele der Verschlussvorrichtung 14 detailliert beschrieben, wobei an der Dachkassette 12 zwei spiegelbildlich ausgeführte Verschlussvorrichtungen angebracht sind, jedoch nur die in Fahrtrichtung gesehen linke Verschlussvorrichtung 14 in den Figuren wiedergegeben ist. Alle Ausführungen hinsichtlich der linken Verschlussvorrichtung 14 beziehen sich sinngemäß auch auf die spiegelbildliche rechte Verschlussvorrichtung. Es sei ferner angemerkt, dass die in Fign. 7 bis 11 mit X bezeichnete Achse in Öffnungsrichtung des Faltdachs 30, d.h., in die gleiche Richtung wie der auf das Fahrzeugheck gerichtete Pfeil 32 in Fig. 2 weist.

Die beiden Verschlussvorrichtungen sind symmetrisch zu einer in Fahrzeuglängsrichtung verlaufenden Symmetrieachse im Inneren der Dachkassette 12 nahe deren seitlichen Außenflächen dergestalt montiert, dass sie an den an den B-Säulen 20 angebrachten Gegenlagern 11 festgelegt werden können, wobei gleichzeitig die Führungsschienenabschnitte 22 der Verschlussvorrichtungen 14 mit den vorderen Führungsschienenabschnitten 26 der Seitenholme 20 fluchtend ausgerichtet werden, indem eine am Führungsschienenabschnitt 22 festgelegte Ausrichtleiste 24 als Ausrichtorgan in Eingriff mit den vorderen Führungsschienenabschnitten 26 gebracht wird.

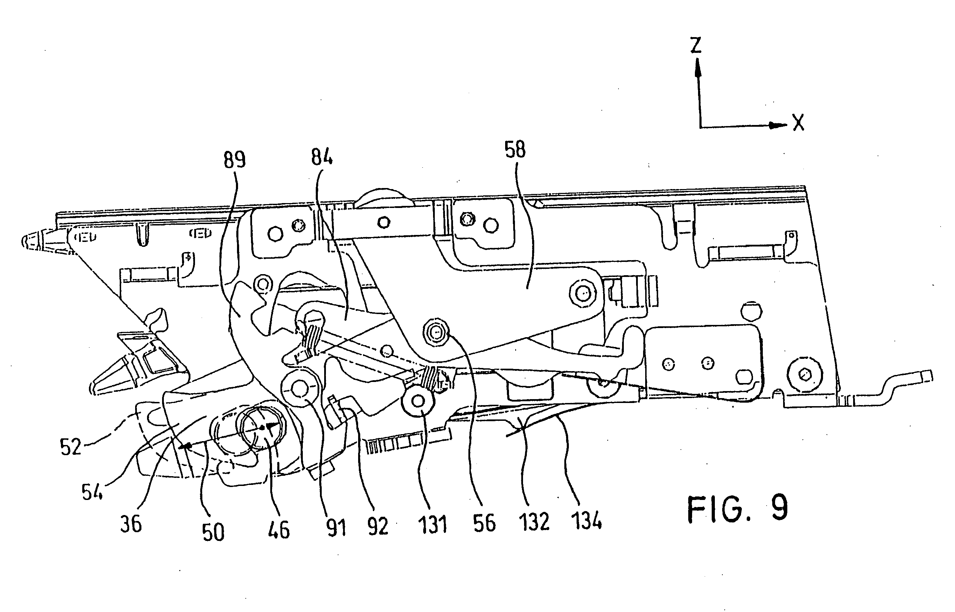

Die Verschlussvorrichtung 14 umfasst eine Lagerplatte 34 mit einem als Aufnahmenut 48 ausgebildeten Aufnahmeorgan, in welches ein Bolzen 46 des an der B-Säule 20 angebrachten Gegenlagers 11 in Verschieberichtung 50 (vgl. Fig. 9) eingeführt und mittels einer Verriegelungsnut 42 eines Verriegelungshakens 36 verriegelt werden kann. Dabei ist die Verriegelungsnut 42 in einem vorderen Arm 38 des Verriegelungshakens 36 plaziert, der über einen Lagerstift 56 schwenkbar in einem geknickten Lagerhebel 58 aufgenommen ist. Der Lagerstift 56 des Verriegelungshakens 36 ist etwa mittig zwischen dem die Verriegelungsnut 42 umfassenden vorderen Arm 38 und einem hinteren Arm 40 angeordnet, wobei der Verriegelungshaken 36 um die Achse des Lagerstifts 56 in Schwenkrichtung 44 (siehe Fig. 7) zwischen einer in den Fign. 7, 9 und 10 dargestellten Verriegelungs- und einer Freigabestellung schwenkbar ist, In Verriegelungsstellung ist der Verriegelungshaken 36 ferner zwischen einer in Fig. 9 in unterbrochenen Linien wiedergegebenen vorderen Rastposition 52 und einer hinteren Rastposition 54 in Verschieberichtung 50 verschiebbar.

Der Lagerhebel 58 ist zweiteilig ausgebildet und umfasst zwei in Y-Richtung um die Dicke einer Buchse 62 beabstandete deckungsgleiche Hälften, deren Abstand so bemessen ist, dass der Verriegelungshaken 36 sowie ein weiter unten beschriebener Steuerhebel 84 zwischen ihnen aufgenommen werden kann. Die Buchse 62 ist auf eine Achse 60 aufgeschoben, die einen Arm 64 des Lagerhebels 58 dergestalt in Y-Richtung durchsetzt, dass sie die Hälften des Lagerhebels 58 beidseitig überragt und zum einen in der Lagerplatte 34 und zum anderen in einem den Arm 64 umgreifenden Lagerbügel 59 gehalten ist, welcher seinerseits an der Lagerplatte 34 festgelegt ist. Der Lagerhebel 58 ist mittels eines an seinem zweiten Arm 66 festgelegten Steuerstifts 68 um die Achse 60 schwenkbar, wobei der Steuerstift 68 den Lagerhebel in Y-Richtung überragt und in eine Steuerbahn 72 einer Schaltkulisse 74 eingreift, in der er über einen Gleitstein 70 geführt ist.

Die Schaltkulisse 74 ist in einem Kulissenkörper 80 integriert, der eine zweite Schaltkulisse 78 aufweist, in deren Steuerbahn 76 ein an dem Steuerhebel 84 festgelegter Steuerbolzen 82 verschiebbar aufgenommen ist und dessen Schwenkbewegung um die Achse des Lagerstifts 56 bewirkt, mittels dem der Steuerhebel 84 gemeinsam mit dem Verriegelungshaken 36 in dem Lagerhebel 58 gelagert ist, wobei sich der Steuerhebel in Richtung auf den vorderen Arm 38 des Verriegelungshakens 36 erstreckt. Eine Abkantung 92 des Steuerhebels 84 greift in eine in -Z-Richtung offene Ausnehmung 85 des Verriegelungshakens 36 ein und dient der Mitnahme des Verriegelungshakens 36, wenn der Steuerhebel 84 über seinen Steuerbolzen 82 von der Steuerbahn 78 im Uhrzeigersinn geschwenkt wird (die vorliegend verwendeten Begriffe Uhrzeigersinn und Gegenuhrzeigersinn beziehen sich jeweils auf eine Betrachtung in Y-Richtung).

Ein Haltehebel 89 ist etwa mittig durch einen Ansatzbolzen 91 schwenkbar auf dem Verriegelungshaken 36 im Bereich zwischen der Ausnehmung 85 und der Verriegelungsnut 42 gelagert, wobei eine Zugfeder 90 zwischen einem an einem ersten Arm 93 des Haltehebels 89 befindlichen Vorsprung 88 und einer Abkantung 86 des Steuerhebels 84 vorgesehen ist. Mittels der Zugfeder 90 wird dem Steuerhebel 84 eine Vorspannung im Uhrzeigersinn dergestalt aufgeprägt, dass die Abkantung 92 des Steuerhebels 84 spielfrei in der Ausnehmung 85 des Verriegelungshakens 36 anliegt, wobei gleichzeitig der Haltehebel 89 ebenfalls im Uhrzeigersinn geschwenkt wird und dieser mittels einer an seinem ersten Arm 93 vorgesehenen Schrägfläche 95 vorgespannt an einem sich in Y-Richtung erstreckenden, an der Lagerplatte 34 festgelegten Haltebolzen 87 anliegt, sofern sich der Verriegelungshaken 36 außerhalb seiner Freigabestellung befindet. Die im ersten Arm 93 des Haltehebels 89 oberhalb eines im Wesentlichen in X-Richtung geöffneten Rastbereichs 98 angeordnete Schrägfläche 95 ist so ausgebildet, dass über die vorgespannte Anlage der Schrägfläche 95 an dem Haltebolzen 87 eine Kraft auf den Verriegelungshaken 36 ausgeübt wird, die letzteren im Gegenuhrzeigersinn um die Achse des Lagerstifts 56 dreht, und der Verriegelungshaken 36 über eine sich in Längsrichtung des Fahrzeugs 10 gesehen hinter der Verriegelungsnut 42 liegende (d.h., ausgehend von der Verriegelungsnut 42 in positiver X-Richtung versetzt angeordnete), in Verschieberichtung 50 verlaufende Gleitfläche 190 auf einer Abkantung 188 der Lagerplatte 34 aufliegt. Der Haltebolzen 87 dient ferner als Fangvorrichtung, in die der Rastbereich 98 des Haltehebels 89 eingreift, wenn der Verriegelungshaken 36 sich in seiner Freigabestellung befindet.

Ein zweiter Arm 94 des Haltehebels 89, der sich unterhalb des Ansatzbolzens 91 (d.h., mit Bezug auf diesen in negativer Z-Richtung versetzt) befindet, weist einen im Wesentlichen in X-Richtung überstehenden Vorsprung 97 auf, der, um den Steuerhebel 84 mit Bezug auf den Verriegelungshaken 36 festzulegen, an eine Unterseite der Abkantung 92 des Steuerhebels 84 anlegbar ist, sobald sich der Verriegelungshaken 36 seiner hinteren Rastposition 54 nähert.

Eine insgesamt mit 100 bezeichnete, sich im Wesentlichen in X-Richtung erstreckende Ausrichtplatte ist mit der Lagerplatte 34 über mehrere Schrauben 99 verbunden, die gleichzeitig einen unteren Bereich des Führungsschienenabschnitts 22 durchsetzten, der überdies über nicht dargestellte Blindniete in seinem oberen Bereich direkt an der Lagerplatte 34 festgelegt ist, wobei ein fester Zusammenhalt von Lagerplatte 34, Führungsschienenabschnitt 22 und Ausrichtplatte 100 erzielt wird. Der Führungsschienenabschnitt 22 weist eine untere und eine obere Gleitbahn 101 bzw. 102 auf, die durch eine in der X-Z-Ebene verlaufende Trennwand 104 voneinander getrennt sind. Die untere Gleitbahn 101 ist seitlich von der Trennwand 104 und einer Rückwand der Lagerplatte 34 sowie nach oben und unten durch Schenkel, die sich ausgehend von der Trennwand 104 in -Y-Richtung erstrecken, begrenzt und in +/-X-Richtung offen. Sie dient der in +/-X-Richtung verschieblichen Aufnahme des Kulsissenkörpers 80, der seinerseits eine in Y-Richtung überstehende Anlaufkante 108 aufweist, die durch einen Durchbruch 106 in der Trennwand 104 in den Bereich der Gleitbahn 102 hineinreicht. Dabei ist der Kulissenkörper 80 in +/-X-Richtung zwischen einer hinteren und einer vorderen Endlage verschiebbar.

Die Gleitbahn 102 ist nach oben und unten durch sich in Y-Richtung erstreckende Schenkel 112 bzw. 110 begrenzt und mittels senkrecht auf den Schenkeln 110 und 112 angeordneter Stege 109 in wenigstens zwei offene Kammern 111, 113 unterteilt, von denen die innere Kammer 111 der Aufnahme eines Mitnahmegleiters 114 und die äußere Kammer 113 der Aufnahme eines Dachspitzengleiters 116 dient. Beide Gleiter 114 und 116 sind in +/-X-Richtung verschiebbar, wobei am Mitnahmegleiter 114 das drucksteife Kabel 174 angebracht ist, welches über den an der Dachkassette 12 festgelegten Elektromotor 222 (siehe Fig. 2) bewegbar ist und in einem Kabelkanal 118 geführt wird, der seitlich neben der Gleitbahn 102 in der Trennwand 104 aufgenommen ist.

Zwischen einer Oberseite 119 der Ausrichtplatte 100 und einer Unterseite des Schenkels 110 ist ein in +/-X-Richtung verschiebbarer Tastgleiter 120 als Teil einer Gegenlagererkennungseinrichtung aufgenommen, der durch Wirkung einer zwischen dem Tastgleiter 120 und der Ausrichtplatte 100 angebrachten Zugfeder 122 in -X-Richtung dergestalt vorgespannt wird, dass seine Tastspitze 124 eine Vorderkante 125 des Führungsschienenabschnitts 22 überragt. An dem der Tastspitze 124 in X-Richtung gesehen gegenüberliegenden Ende des Tastgleiters 120 ist ein Ausrücker 126 angeordnet, der mit einem Ausrückarm 128 eines geknickten Sperrhebels 130 wechselwirkt, der seinerseits um eine Achse 131 schwenkbar zwischen der Lagerplatte 34 und der Ausrichtplatte 100 gelagert ist. An einem sich im Wesentlichen senkrecht zu dem Ausrückarm 128 erstreckenden Arm 132 des Sperrhebels 130 ist eine Sperrnase 133 vorgesehen, die ausgelegt ist, in eine komplementär geformte, nicht dargestellte Anlaufkante an der Unterseite des Kulissenkörpers 80 einzugreifen, wenn sich der Kulissenkörper 80 in einer hinter seiner vorderen Endlage befindlichen Warnposition aufhält. Dabei ist die Warnposition des Kulissenkörpers 80 mit Bezug auf die Lagerplatte 34 an einer Stelle angeordnet, die sich zwischen der vorderen und der hinteren Endlage des Kulissenkörpers 80 befindet, wobei die vordere Endlage einer kleineren X-Koordinate entspricht als die hintere Endlage.

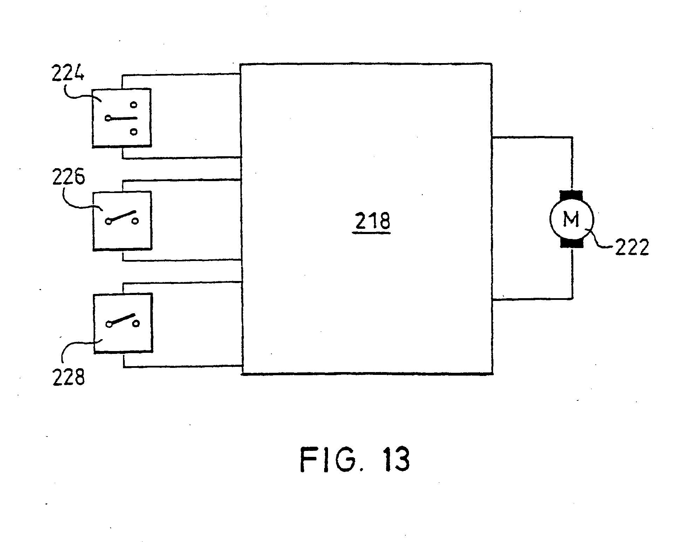

Der Sperrhebel 130 wird mittels eines Federarms 134 einer zwei Federarme 134 und 136 umfassenden Kombifeder 138 im Gegenuhrzeigersinn belastet, so dass die Sperrnase 133 bei sich in Warnposition befindlichem Kulissenkörper 80 vorgespannt an dessen Anlaufkante anliegt und verhindert, dass der Kulissenkörper 80 seine vordere Endlage erreicht, falls sich das Gegenlager 11 nicht in seiner Solllage mit Bezug auf die Verschlussvorrichtung 14 befindet. Der Kulissenkörper ist in diesem Fall nur zwischen seiner hinteren Endlage und seiner Warnposition verschiebbar. Wird hingegen beim Ankopplungsvorgang der Verschlussvorrichtung 14 an das Gegenlager 11 die Solllage des Gegenlagers 11 relativ zur Verschlussvorrichtung 14 erreicht, kommt die Tastspitze 124 des Tastgleiters 120 an dem Gegenlager 11 zur Anlage, der Tastgleiter 120 wird in X-Richtung entgegen der Kraft der Zugfeder 122 so weit verschoben, dass der Ausrücker 126 den Ausrückarm 128 des Sperrhebels 130 betätigt und letzteren um die Achse 131 im Uhrzeigersinn entgegen der Wirkung des Federarms 134 schwenkt, und die Sperrnase 133 des Sperrhebels 130 gelangt außer Eingriff mit Bezug auf die Anlaufkante an der Unterseite des Kulissenkörpers 80. Der Kulissenkörper 80 ist nun weiter nach vorne (also in X-Richtung) in Richtung auf seine vordere Endlage verschiebbar. Der zweite Federarm 136 der Kombifeder 138 ist nach oben in Z-Richtung vorgespannt und kann entgegen seiner Vorspannung von dem hinteren Arm 40 des Verriegelungshakens 36 nach unten ausgelenkt werden, wenn sich der Verriegelungshaken 36 in seiner Freigabestellung befindet. Dabei wird vom Federarm 136 in seiner nach oben vorgespannten Grundstellung ein elektrischer Mikroschalter 140 betätigt, der gemeinsam mit der Kombifeder 138 an der Lagerplatte 34 festgelegt ist, wobei der Mikroschalter 140 ein entsprechendes Signal "Verriegelungshaken in Verriegelungsstellung" liefert. Dieses Signal wird als Eingangsgröße in eine die motorische Betätigung der Verschlussvorrichtung 14 steuernde elektronische Steuerung 218 (vgl. Fig. 13) eingespeist, die ebenfalls die Steuerung der motorischen Betätigung der Öffnungs- und Schließbewegung des Faltdachs 30 übernimmt.

Es kann ferner vorgesehen sein, den Federarm 136 anstelle seiner federnden Vorspannung nach oben formschlüssig mit dem hinteren Arm 40 des Verriegelungshakens 36 zu verbinden, so dass letzterer den Federarm 136 in beide Richtungen, d.h., nach oben und unten, betätigt.

Alternativ zur Wechselwirkung der Tastspitze 124 des Tastgleiters 120 mit dem Gegenlager kann auch eine Wechselwirkung der Tastspitze 124 mit dem Seitenholm 28 vorgesehen sein, wobei dann, wenn der Seitenholm 28 sich in Solllage befindet und er insbesondere mit dem Fahrzeug verriegelt ist, der Tastgleiter 120 beim Ankopplungsvorgang der Verschlussvorrichtung 14 an das Gegenlager vom Seitenholm 28 betätigt und in X-Richtung so weit verschoben wird, dass die Sperrnase 133 des Sperrhebels 130 den Kulissenkörper 80 nicht mehr in seiner Warnposition arretiert. Ist der Seitenholm 28 hingegen vom Fahrzeug abgenommen oder befindet er sich aus einem anderen Grund nicht in seiner Solllage mit Bezug auf die Verschlusseinrichtung 14 in Ankoppelstellung, wird die Tastspitze 124 beim Ankoppelvorgang nicht oder nicht weit genug in X-Richtung betätigt und der Kulissenkörper 80 bei Erreichen seiner Warnposition arretiert, auch wenn sich das Gegenlager in Solllage befindet. Somit wird die Gegenlagererkennungseinrichtung im Prinzip zur Seitenholmerkennung verwendet. Dies hat den weiteren Vorteil, dass bei Ankopplung der Verschlussvorrichtung 14 an das weitere Gegenlager, welches am Viergelenk angebracht ist, der Kulissenkörper 80 nicht weiter als bis in seine Warnposition verschoben werden kann, da sich zwar das am Viergelenk vorgesehene Gegenlager in Solllage befindet, ein Seitenholm aber nicht vorhanden ist. Somit wird verhindert, dass die weiter unten beschriebene Arretierung des Dachspitzengleiters 116 mit Bezug auf die Verschlusseinrichtung 14 gelöst wird, wenn die Verschlussvorrichtung 14 am Gegenlager des Viergelenks angekoppelt wird.

Eine Ausrichtgabel 152 an einem vorderen Ende der Ausrichtplatte 100 dient der Ausrichtung der Verschlussvorrichtung 14 in Y- und Z-Richtung mit Bezug auf den vorderen Führungsschienenabschnitt 26, zu welchem Zweck die Ausrichtgabel 152 in ein komplementär geformtes Ausrichtlager eingreift, welches eine Einheit mit dem schwimmend im Seitenholm 28 gelagerten vorderen Führungsschienenabschnitt 26 bildet. Die am Führungsschienenabschnitt 22 der Verschlussvorrichtung 14 festgelegte Ausrichtleiste 24, die sich in Z-Richtung oberhalb der Ausrichtgabel 152 befindet und in Eingriff mit dem vorderen Führungsschienenabschnitt 26 gebracht werden kann, verhindert eine Verkippung um die X-Achse des vorderen Führungsschienenabschnitts 26 mit Bezug auf den Führungsschienenabschnitt 22. Eine Ausrichtfläche 150 ist an einer Seitenfläche der Ausrichtgabel 152 in der X-Z-Ebene gelegen und an die Stirnfläche des Bolzens 46 des an der B-Säule 20 angebrachten Gegenlagers 11 anlegbar, so dass im Zusammenwirken mit der spiegelbildlichen rechten Verschlussvorrichtung und dem rechten Bolzen eine in Y-Richtung gesehen symmetrische Ausrichtung der gesamten Dachkassette 12 mit Bezug auf die beiden Bolzen 46 der Gegenlager 11 erfolgt.

An einer in Y-Richtung verlaufenden Abkantung der Ausrichtplatte 100 ist eine Endlagenfeder 146 festgelegt, die zwei Federarme 142 und 144 umfasst, von denen der Federarm 142 von unten in die Kammer 113 eingreift, in der der Dachspitzengleiter 116 aufgenommen ist, welcher mit einer Dachspitze 149 des Faltdachs 30 verbunden ist und die Öffnungs- und Schließbewegung desselben bewirkt. Der zweite Federarm 144 ist ausgelegt, einen elektrischen Mikroschalter 148 mechanisch zu betätigen, wenn sich der Dachspitzengleiter 116 in einer Halteposition befindet, wobei der Mikroschalter 148 das Signal "Dachspitzengleiter in Halteposition" an die elektronische Steuerung 218 gibt (siehe Fig. 13). In dieser Position ist der Dachspitzengleiter 116 vollständig in dem Führungsschienenabschnitt 22 der Verschlussvorrichtung 14 aufgenommen und lässt sich mit Bezug auf den Führungsschienenabschnitt 22 arretieren. Mit dem Dachspitzengleiter 116 sind sämtliche verschiebbaren Teile des Faltdachs 30 in dem Führungsschienenabschnitt 22 gehalten und können mitsamt der Dachkassette 12 von dem Gegenlager 11 abgekoppelt werden.

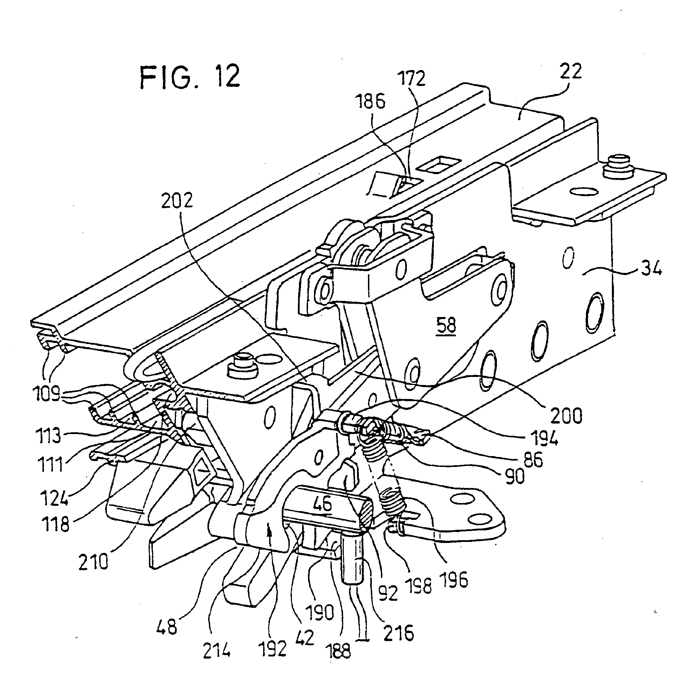

Wie aus Fig. 13 ersichtlich wird, erhält die Steuerung 218 für das Fahrzeugdach neben den Signalen eines zwei Schaltpositionen ("Öffnen" und "Schließen") aufweisenden Betätigungsschalters 224 auch die Signale zweier Sensoren 226 und 228 als Eingangsgrößen. Der Betätigungsschalter 224 ist vom Bediener bedienbar und dient der Einleitung sowohl der Öffnungs- und Schließbewegung des Faltdachs als auch der An- und Abkopplungsbewegung der Verschlussvorrichtung, wobei über die Schwenk- und Verschiebebewegungen des Verriegelungshakens die Verriegelung und Entriegelung der Dachkassette 12 mit Bezug auf die Gegenlager 11 an der B-Säulen 20 bewirkt wird. Alternativ zu dem einen Betätigungsschalter 224 können zwei Betätigungsschalter vorgesehen sein, von denen einer die Öffnungs- und Schließbewegung des Faltdachs und einer bei vollständig geöffnetem Faltdach die An- und Abkopplungsbewegung der Verschlussvorrichtung einleitet. Bei den beiden Sensoren 226 und 228 handelt es sich im Fall der ersten Ausführungsform der Verschlussvorrichtung (dargestellt in den Fign. 7 bis 11) um die Mikroschalter 148 bzw. 140. Bei der weiter unten im Zusammenhang mit Fig. 12 beschriebenen zweiten Ausführungsform der Verschlussvorrichtung wird als Sensor 228 anstelle des Mikroschalters 140 ein induktiver Sensor 216 eingesetzt.

Bei geschlossenem Faltdach 30 befinden sich der Dachspitzengleiter 116 und der Mitnahmegleiter 114 in dem vorderen Führungsschienenabschnitt 26 und sind mittels eines Riegelsteins 164 formschlüssig miteinander verbunden, der in Z-Richtung verschiebbar im Dachspitzengleiter 116 aufgenommen ist. Die Dachkassette 12 ist über die Verschlussvorrichtungen 14 an den B-Säulen 20 des Fahrzeugs 10 festgelegt, wobei sich der Verriegelungshaken 36 in Verriegelungsstellung in seiner hinteren Rastposition 54 aufhält. Der Kulissenkörper 80 steht in seiner vorderen Endlage und ist in dieser durch einen in Y-Richtung verschiebbar gelagerten Riegelstein 156, der mittels einer über eine Druckfeder 160 belasteten Kugel 158 in seinen Endlagen einrastbar ist, in einer Aussparung 162 der Lagerplatte 34 gehalten. Während der die Schwenkbewegung des Lagerhebels 58 und damit die Verschiebebewegung des Verriegelungshakens 36 steuernde Steuerstift 68 mit dem Gleitstein 70 am hinteren Ende eines Haltebereichs 204 der Steuerbahn 72 der Schaltkulisse 74 steht, befindet sich der Steuerbolzen 82 des Steuerhebels 84 in einem Haltebereich 206 der Steuerbahn 76 der für die Schwenkbewegung des Verriegelungshakens 36 zuständigen Schaltkulisse 78. Der Haltehebel 89 ist durch Anlage seiner Schrägfläche 95 an dem Haltebolzen 87 soweit im Gegenuhrzeigersinn geschwenkt, dass sein Vorsprung 97 die Abkantung 92 des Steuerhebels 84 untergreift und diesen mit Bezug auf den Verriegelungshaken 36 festlegt. Da die Position des Steuerhebels 84 seinerseits durch seine Aufnahme sowohl im Lagerhebel 58 (durch den Lagerstift 56) als auch im Haltebereich 206 der Schaltkulisse 78 (durch den Steuerbolzen 82) fest vorgegeben ist, ist der Verriegelungshaken 36 letztendlich in seiner Verriegelungsposition blockiert. Damit sich der Kulissenköper 80 in seiner vorderen Endlage befinden kann, muss selbstverständlich wie oben beschrieben das Gegenlager 11 bzw. der Seitenholm 28 in Solllage stehen, der Tastgleiter 120 betätigt und die Sperrnase 133 des Sperrhebels 130 außer Eingriff mit Bezug auf die an der Unterseite des Kulissenkörpers 80 angeordnete Anlaufkante sein.

Um die Dachkassette 12 von der B-Säule 20 abzukoppeln, muss zunächst durch Betätigung der Schaltposition "Öffnen" des Betätigungsschalter 224 das Faltdach 30 geöffnet werden, indem der Dachspitzengleiter 116 in Öffnungsrichtung 32 nach hinten verschoben wird. Die Verschiebebewegung wird dem Dachspitzengleiter 116 vom Mitnahmegleiter 114 aufgeprägt, der seinerseits mittels der an sich bekannten drucksteifen Kabel 174 über den Elektromotor 222 bewegt wird, der in der Dachkassette 12 aufgenommen ist. Sowohl der Dachspitzengleiter 116 als auch der Mitnahmegleiter 114 gelangen schließlich von dem vorderen Führungsschienenabschnitt 26 in den Führungsschienenabschnitt 22 der Verschlussvorrichtung 14, wobei der Dachspitzengleiter 116, sobald er in seiner Halteposition angelangt ist, an einen Anschlag 168 anstößt, der in dem Führungsschienenabschnitt 22 vorgesehen ist und eine weitere Verschiebung des Dachspitzengleiters 116 nach hinten (in X-Richtung) verhindert (siehe Fig. 11), wobei auch, wie oben beschrieben, der elektrische Mikroschalter 148 vom Federarm 144 betätigt wird. Der Mitnahmegleiter 114 hat jetzt seine in Fig. 11 wiedergegebene Übergabeposition erreicht. Betätigt der Bediener weiterhin die Schaltposition "Öffnen" des Betätigungsschalters 224, so wird bei an der Steuerung 218 anliegendem Signal "Dachspitzengleiter in Halteposition" des Mikroschalters 148 die Abkopplungsbewegung der Verschlussvorrichtung eingeleitet, und zwar vorzugsweise erst, nachdem bestimmte Sicherheitsbedingungen erfüllt sind. Hierzu kann z.B. zählen, dass das Fahrzeug nicht bewegt werden darf und/oder dass der Bediener den Betätigungsschalter 224 während einer vorbestimmten Betätigungszeit in der Schaltposition "Öffnen" halten muss.

Bei Einleitung des Abkopplungsvorgangs wird zunächst der Mitnahmegleiter 114 vom Elektromotor 222 über das drucksteife Kabel 174 mit einer Kraft in X-Richtung beaufschlagt, so dass eine Schrägfläche 170 in einer den Riegelstein 164 aufnehmenden Aussparung 166 in dem Mitnahmegleiter 114 eine Kraft in Z-Richtung auf den Riegelstein 164 ausübt, die ausreicht, letzteren in Z-Richtung so weit zu verschieben, dass der Riegelstein 164 außer Eingriff mit Bezug auf die Aussparung 166 in dem Mitnahmegleiter 114 gelangt und mit seinem dem Mitnahmegleiter 114 abgewandten Ende in eine Aussparung 172 in dem Führungsschienenabschnitt 22 geschoben wird. Damit ist der Dachspitzengleiter 116 formschlüssig in dem Führungsschienenabschnitt gehalten, und der Mitnahmegleiter 114 für eine weitere Verschiebung in X-Richtung freigegeben, wobei die dem Dachspitzengleiter 116 zugewandte Seite des Mitnahmegleiters 114 so ausgebildet ist, dass ein Lösen der Formschlussverbindung zwischen dem Dachspitzengleiter 116 und dem Führungsschienenabschnitt 22 durch eine Verschiebung des Riegelsteins 164 im Dachspitzengleiter 116 in Z-Richtung ausgeschlossen ist. Nach Durchlaufen einer vorbestimmten Wegstrecke kommt der Mitnahmegleiter 114 mittels seiner Koppelfläche 176 an der Anlaufkante 108 des sich in der vorderen Endlage gemäß Fig. 11 befindlichen Kulissenkörpers 80 zur Anlage, wobei gleichzeitig eine komplementär zum Riegelstein 156 geformte Aussparung 180 in der dem Kulissenkörper 80 zugewandten Seite des Mitnahmegleiters 114 so zu liegen kommt, dass bei weiterer Kraftausübung in X-Richtung auf den Mitnahmegleiter 114 dieser den Kulissenkörper 80 über die an der Anlaufkante 108 anliegende Koppelfläche 176 mitnimmt, wobei eine Schrägfläche 178 in der den Riegelstein 156 aufnehmenden Aussparung 162 in der Lagerplatte 34 eine Kraft in Y-Richtung auf den Riegelstein 156 ausübt, die den Riegelstein 156 in dem Kulissenkörper 80 in seine zweite Endlage verschiebt, in der der Riegelstein 156 außer Eingriff mit Bezug zur Aussparung 162 und in Eingriff mit Bezug zur Aussparung 180 steht. Der Riegelstein 156 löst die Formschlussverbindung des Kulissenkörpers 80 mit der Lagerplatte 34 und bildet zur gleichen Zeit eine solche zwischen dem Kulissenkörper 80 und dem Mitnahmegleiter 114, der den Kulissenkörper 80 in Richtung auf dessen hintere Endlage mitnimmt. Dabei ist eine Verschiebung des Riegelsteins 156 in -Y-Richtung aus der Aussparung 180 heraus nicht nur aufgrund der federbelasteten Kugel 158 ausgeschlossen, die den Riegelstein 156 in seiner Endlage hält, sondern auch dadurch, dass die dem Mitnahmegleiter 114 zugewandte Seite der Lagerplatte 34 hinter der Schrägfläche 178 entsprechend nahe an den Kulissenkörper 80 herangeführt ist.

Bei Verschiebung des Kulissenkörpers 80 in X-Richtung auf seine hintere Endlage hin, gelangt der Gleitstein 70, der auf dem Steuerstift 68 des Lagerhebels 58 aufgenommen ist, zunächst von dem Haltebereich 204 in einen rampenförmig nach unten verlaufenden Verschiebebereich 208 der Steuerbahn 72. Hierbei wird dem Lagerhebel 58 um dessen Achse 60 eine Schwenkbewegung im Uhrzeigersinn aufgezwungen, die über den Lagerstift 56 in eine Verschiebebewegung des Verriegelungshakens 36 umgeformt wird, wobei der Verriegelungshaken 36 von seiner hinteren Rastposition 54 in Verschieberichtung 50 nach vorne in X-Richtung auf seine vordere Rastposition 52 hin verschoben wird und über seine Gleitfläche 190 auf der Abkantung 188 der Lagerplatte 34 gleitet. Die vordere Rastposition 52 ist erreicht, wenn sich der Gleitstein 70 in der tiefsten Stelle des rampenförmigen Verschiebebereichs 208 der Steuerbahn befindet und in einen vorderen Haltebereich 212 übergeht, in dem er im Wesentlichen horizontal geführt wird, so dass der Lagerhebel 58 keine Schwenkbewegung mehr durchführt.

Etwa bei Erreichen der vorderen Rastposition 52 wird durch weitere Verschiebung des Kulissenkörpers 80 in X-Richtung die Schwenkbewegung des Verriegelungshakens 36 von seiner Verriegelungs- in seine Freigabestellung eingeleitet, indem der Steuerbolzen 82 des Steuerhebels 84 den Haltebereich 206 der Steuerbahn 76 verlässt und auf einen aufwärts gerichteten Bereich einer Schwenknocke 210 trifft, die die Steuerbahn 76 im vorderen Bereich in der Form eines liegenden Y aufteilt. Der Steuerbolzen 82 folgt dem oberen Schenkel des liegenden Y und prägt über die Abkantung 92 dem Verriegelungshaken 36 eine Schwenkbewegung um die Achse des Lagerstifts 56 auf, der auch den Steuerhebel 84 schwenkbar mit dem Lagerhebel 58 verbindet. Sobald der Verriegelungshaken 36 in die Freigabestellung angehoben ist, rastet der Rastbereich 98 des Haltehebels 89 in den Haltebolzen 87 ein und hält den Verriegelungshaken 36 in seiner Freigabestellung. Dabei wird über den Federarm 136 die Betätigung des Mikroschalters 140 aufgehoben und der Bolzen 46 des Gegenlagers 11 kommt aus der Verriegelungsnut 42 des Verriegelungshakens 36 frei, so dass die Dachkassette 12 von der B-Säule 20 abgekoppelt ist und, wie bereits im Zusammenhang mit den Fign. 1 bis 6 beschrieben wurde, abgesenkt werden kann.

Der Ankopplungsvorgang der Dachkassette 12 mittels der Verschlussvorrichtung 14 am Gegenlager 11 verläuft sinngemäß in umgekehrter Reihenfolge, wobei auf folgende Besonderheiten hingewiesen werden soll: Befindet sich der Kulissenkörper 80 in seiner hinteren Endlage, steht der Steuerbolzen 82 vor der Vorderkante der Schwenknocke 210. Wird die Verschlussvorrichtung 14 manuell gegen das Gegenlager 11 gedrückt, stößt zunächst der Bolzen 46 von vorne gegen den in die Aufnahmenut 48 hineinragenden zweiten Arm 94 des Haltehebels 89, wodurch diesem eine Schwenkbewegung gegen den Uhrzeigersinn aufgezwungen wird und gleichzeitig der Bolzen 46 beim Auftreffen auf die Rückwand der Verriegelungsnut 42 auf den Verriegelungshaken 36 eine Kraft ausübt, deren Wirkungslinie unterhalb des Lagerstifts 56 verläuft, so dass dem Verriegelungshaken 36 ein Drehmoment im Gegenuhrzeigersinn aufgeprägt wird. Auf diese Weise kommt der Rastbereich 98 des Haltehebels 89 vom Haltebolzen 87 frei, und der Verriegelungshaken 36 kann in seine Verriegelungsstellung schwenken, ohne dass der Steuerbolzen 82 diese Schwenkbewegung behindert, da er außerhalb der Steuerbahn 76 steht. Sobald die Schrägfläche 95 des Haltehebels 89 an dem Haltebolzen anliegt, wird der Verriegelungshaken 36, wie bereits beschrieben, durch die Zugfeder 90 in Richtung auf die Verriegelungsstellung vorgespannt. Hat der Verriegelungshaken 36 seine Verriegelungsstellung erreicht, wird der Mikroschalter 140 betätigt und liefert als Sensor 228 der Steuerung 218 das Eingangssignal "Verriegelungshaken in Verriegelungsstellung". Nach Ablauf einer vorbestimmten Totzeit, beispielsweise nach Ablauf von 5 Sekunden, löst die Steuerung 218 die automatische Zuziehbewegung des Verriegelungshakens 36 aus, indem sie den Elektromotor 222 ansteuert, der seinerseits die Verschiebung des Kulissenkörpers 80 nach vorn in Richtung auf seine vordere Endlage betätigt.

Bei Bewegung des Kulissenkörpers 80 nach vorne (in -X-Richtung) wird der Steuerbolzen 82 des Steuerhebels 84 durch die Schwenknocke 210 nach unten ausgelenkt und in den unteren Arm des liegenden Y eingeführt. Diese Bewegung wird nicht auf den Verriegelungshaken 36 übertragen, da die Abkantung 92 des Steuerhebels 84 noch nicht von dem Vorsprung 97 des Haltehebels 89 untergriffen wird, sondern vielmehr nach unten aus der Ausnehmung 85 des Verriegelungshakens 36 auswandern kann. Erst wenn der Verriegelungshaken 36 weiter in Richtung auf seine hintere Rastposition 54 verschoben wird, ist der Haltehebel 89 soweit im Gegenuhrzeigersinn verschwenkt, dass der Steuerhebel 84 mit Bezug zum Verriegelungshaken 36 durch Untergreifen der Unterkante der Abkantung 92 mittels des Vorsprungs 97 des Haltehebels 89 festgelegt ist. Sollten sich das Gegenlager 11 und/oder der Seitenholm 28 in Außersolllage befinden, wird die Tastspitze 124 des Tastgleiters 120 nicht oder nicht weit genug in X-Richtung betätigt und der Kulissenkörper 80 vor Erreichen der vorderen Endlage in der Warnposition angehalten, indem die an seiner Unterseite befindliche Anlaufkante an die Sperrnase 133 des Sperrhebels 130 anstößt. Dabei wird der das drucksteife Kabel 174 betätigende Elektromotor 222 blockiert und infolge dessen von der Steuerung 218 abschaltet. Ist das Gegenlager 11 hingegen in Solllage, kann der Kulissenkörper 80 bis in seine vordere Endlage verschoben werden, wobei der Verriegelungshaken seine hintere Rastposition einnimmt. Der Mitnahmegleiter 114 wird vom Elektromotor 222 weiterhin mit einer Kraft in -X-Richtung beaufschlagt, was zur Folge hat, dass der Riegelstein 156 von einer Schrägfläche 182 in der Aussparung 180 des Mitnahmegleiters 114 in Y-Richtung in die Aussparung 162 in der Lagerplatte 34 verschoben wird und gleichzeitig der Mitnahmegleiter 114 vom Kulissenkörper 80 freikommt. Der Riegelstein 156 wird durch die von der Druckfeder 160 belastete Kugel 158 in dieser Stellung gehalten, und die automatische Zuziehbewegung der Verschlussvorrichtung 14 wird durch Abschalten des Elektromotors 222 beendet.

Betätigt der Bediener nun die Schaltposition "Schließen" des Betätigungsschalters 224, wird der Elektromotor 222 wieder aktiviert und verschiebt den Mitnahmegleiter 114 weiter nach vorne in die Übergabeposition, wo er mittels einer Koppelfläche 184 an dem Dachspitzengleiter 116 zum Anliegen kommt. Dabei wird über das drucksteife Kabel 174 auf den Dachspitzengleiter 116 eine Kraft nach vorne ausgeübt, die ausreicht, über eine Schrägfläche 186 an einer Vorderseite der Aussparung 172 im Führungsschienenabschnitt 22 den Riegelstein 164 des Dachspitzengleiters 116 in -Z-Richtung aus der Aussparung 172 heraus und in die Aussparung 166 des Mitnahmegleiters 114 hinein zu schieben. Auf diese Weise wird die Kopplung zwischen dem Dachspitzengleiter 116 und dem Führungsschienenabschnitt 22 aufgehoben und eine Kopplung zwischen dem Dachspitzengleiter 116 und dem Mitnahmegleiter 114 aufgebaut. Alternativ zur oben beschriebenen Möglichkeit, die automatische Zuziehbewegung zu beenden, sobald der Kulissenkörper 80 mit Bezug auf die Verschlussvorrichtung 14 mittels des Riegelsteins 156 festgesetzt ist, kann diese auch erst beendet werden, wenn die Kopplung zwischen dem Mitnahmegleiter 114 und dem Dachspitzengleiter 116 aufgebaut ist.

In Fig. 12 ist eine alternative Ausgestaltung einer Verschlussvorrichtung veranschaulicht, welche sich von der in den Fign. 7 bis 11 wiedergegebenen im Wesentlichen nur dadurch unterscheidet, dass auf einen Haltehebel entsprechend dem Haltehebel 89 der ersten Ausführungsform verzichtet wird und ein Verriegelungshaken 192 keinen hinteren Arm entsprechend dem hinteren Arm 40 des Verriegelungshakens 36 aufweist. Die federende Vorspannung des Verriegelungshakens 192 in Richtung auf seine Verriegelungsstellung wird durch eine Zugfeder 196 aufgebracht, die sich zwischen einer Abkantung 194 am Verriegelungshaken 192 und einer Haltenase 198 an der Lagerplatte 34 erstreckt. Ein abgewandelter Steuerhebel 200 weist anstelle des Steuerbolzens 82 des Steuerhebels 84 einen einstückig an dem Steuerhebel 200 angeformten Steuerlappen 202 auf, der mit der Steuerbahn 76 wechselwirkt, um die Schwenkbewegung des Verriegelungshakens 192 zu steuern. Die Abkantung 92 des Steuerhebels 200 liegt, ebenso wie dies beim Steuerhebel 84 der ersten Ausführungsform der Verschlussvorrichtung der Fall ist, im Uhrzeigersinn vorgespannt von unten am Verriegelungshaken 192 an, allerdings wird die Vorspannkraft bei dem zweiten Ausführungsbeispiel gemäß Fig. 12 von der Zugfeder 90 geliefert, die sich, im Unterschied zur ersten Ausführungsform, zwischen der Abkantung 86 am Steuerhebel 200 und der Abkantung 194 am Verriegelungshaken 192 erstreckt.

Wenn der Kulissenkörper 80 sich seiner hinteren Endlage nähert, gelangt der Steuerlappen 202 - ebenso wie der Steuerbolzen 82 der ersten Ausführungsform - vor die Vorderkante der Schwenknocke 210. Da der Verriegelungshaken 192 in seiner Freigabestellung jedoch durch keinen Haltehebel gehalten wird, schwenkt er nun frei in die Verriegelungsstellung. Bei Ankopplung der Verschlussvorrichtung gemäß Fig. 12 an dem Gegenlager 11 muss daher der sich in Verriegelungsstellung in seiner vorderen Rastposition befindliche Verriegelungshaken 192 zunächst mittels des Bolzens 46 in die Freigabestellung angehoben werden, wozu der Verriegelungshaken 192 an seiner Vorderseite eine Schrägfläche 214 aufweist. Eine Blockierung des Verriegelungshakens 192 in Verriegelungsstellung ist im Gegensatz zur ersten Ausführungsform der Verschlussvorrichtung genauso wenig vorgesehen wie der Mikroschalter 140 zur Abfrage der Schwenkstellung des Verriegelungshakens 192. Statt dessen wird der induktive Sensor 216 eingesetzt, der vom Bolzen 46 des Gegenlagers 11 betätigt wird, wenn der Bolzen 46 sich in einer Position innerhalb der Aufnahmenut 48 befindet, in welcher er von der Verriegelungsnut 42 des sich in der vorderen Rastposition 52 befindlichen Verriegelungshakens 192 arretierbar ist. Ob der Verriegelungshaken 192 tatsächlich in die Verriegelungsstellung zurückgeschwenkt ist, wird durch den induktiven Sensor 216, der anstelle des Mikroschalters 140 als Sensor 228 an der Steuerung 218 angeschlossen ist, nicht detektiert. Sollte dies jedoch nicht der Fall sein, wird die Zuziehbewegung des Verriegelungshakens 192 nicht auf das Gegenlager 11 übertragen, so dass dieses die Solllage nicht erreicht und die Tastspitze 124 der auch in der zweiten Auführungsform der Verschlussvorrichtung vom Prinzip her unverändert übernommenen Gegenlagererkennungseinrichtung nicht bzw. nicht weit genug in X-Richtung betätigt wird. Die Gegenlagererkennungseinrichtung blockiert auf die bereits beschriebene Weise den Kulissenkörper 80 bei Erreichen der Warnposition, woraufhin der Elektromotor 222 ebenfalls blockiert wird. Diesen Zustand erkennt die Steuerung 218 und deaktiviert den Elektromotor 222. Die Situation "Kulissenkörper in Warnposition", die gleichbedeutend mit "Gegenlager nicht in Solllage" ist, wird vorteilhafter Weise dem Bediener angezeigt, so dass dieser über erneute Betätigung der Schaltposition "Öffnen" des Betätigungsschalters 224 die Verschlussvorrichtung wieder vom Gegenlager 11 abkoppelt, um einen neuen Ankopplungsvorgang vorzunehmen.

### Bezugszeichenliste

- 1: Fahrzeugdach
- 2: vorderer Querträger
- 3: A-Säule
- 4: hinterer Querträger
- 5: Hecktür
- 6: Heckteil
- 7: Unterseite (von 6)
- 8, 9: Pfeil
- 10: Fahrzeug
- 11: Gegenlager
- 12: Dachkassette
- 13: vorderes Seitenholmlager
- 14: Verschlussvorrichtung
- 15: hinteres Seitenholmlager
- 16: Seitenteil
- 18: Heckscheibe
- 20: B-Säule
- 22: Führungsschienenabschnitt
- 24: Ausrichtleiste
- 26: vorderer Führungsschienenabschitt
- 28: Seitenholm
- 30: Faltdach
- 32: Öffnungs- bzw. Schließrichtung
- 34: Lagerplatte
- 36: Verriegelungshaken
- 38: vorderer Arm (von 36)
- 40: hinterer Arm (von 36)
- 42: Verrieglungsnut
- 44: Schwenkrichtung
- 46: Bolzen
- 48: Aufnahmenut
- 50: Verschieberichtung
- 52: vordere Rastposition
- 54: hintere Rastposition
- 56: Lagerstift
- 58: Lagerhebel
- 59: Lagerbügel
- 60: Achse (von 58)
- 62: Buchse (von 58)
- 64, 66: Arm (von 58)
- 68: Steuerstift
- 70: Gleitstein
- 72: Steuerbahn
- 74: Schaltkulisse
- 76: Steuerbahn
- 78: Schaltkulisse
- 80: Kulissenkörper
- 82: Steuerbolzen
- 84: Steuerhebel
- 85: Ausnehmung (von 36)
- 86: Abkantung (von 84 bzw. 200)
- 87: Haltebolzen
- 88: Vorsprung (von 89)
- 89: Haltehebel
- 90: Zugfeder
- 91: Ansatzbolzen
- 92: Abkantung (von 84 bzw. 200)
- 93: erster Arm (von 89)
- 94: zweiter Arm (von 89)
- 95: Schrägfläche
- 97: Vorsprung
- 98: Rastbereich
- 99: Schraube
- 100: Ausrichtplatte
- 101, 102: Gleitbahn
- 104: Trennwand
- 106: Durchbruch
- 108: Anlaufkante
- 109: Steg
- 110, 112: Schenkel
- 111, 113: Kammer
- 114: Mitnahmegleiter
- 116: Dachspitzengleiter
- 118: Kabelkanal
- 119: Oberseite
- 120: Tastgleiter
- 122: Zugfeder
- 124: Tastspitze
- 125: Vorderkante
- 126: Ausrücker
- 128: Ausrückarm
- 130: Sperrhebel
- 131: Achse
- 132: Arm (von 130)
- 133: Sperrnase
- 134, 136: Federarm
- 138: Kombifeder
- 140: Mikroschalter
- 142, 144: Federarm
- 146: Enlagenfeder
- 148: Mikroschalter
- 149: Dachspitze
- 150: Ausrichtfläche
- 152: Ausrichtgabel
- 156: Riegelstein
- 158: Kugel
- 160: Druckfeder
- 162: Aussparung
- 164: Riegelstein
- 166: Aussparung
- 168: Anschlag
- 170: Schrägfläche
- 172: Aussparung
- 174: drucksteifes Kabel
- 176: Koppelfläche
- 178: Schrägfläche
- 180: Aussparung
- 182: Schrägfläche
- 184: Koppelfläche
- 186: Schrägfläche
- 188: Abkantung
- 190: Gleitfläche
- 192: Verriegelungshaken
- 194: Abkantung
- 196: Zugfeder
- 198: Haltenase
- 200: Steuerhebel
- 202: Steuerlappen
- 204, 206: Haltebereich
- 208: Verschiebebereich
- 210: Schwenknocke
- 212: Haltebereich
- 214: Schrägfläche
- 216: induktiver Sensor
- 218: Steuerung
- 222: Elektromotor
- 224: Betätigungsschalter
- 226, 228: Sensor

## Patentansprüche

1. Fahrzeugdach mit wenigstens einem von einem Antriebsmotor (222) betätigbaren öffnungsfähigen Dachteil (30) und wenigstens einem zeitweise feststehenden Dachteil (12), welches das öffnungsfähige Dachteil (30) in dessen Öffnungsstellung lagert, wobei der das öffnungsfähige Dachteil antreibende Antriebsmotor (222) zumindest mittelbar auch eine Verriegelung und/oder eine Entriegelung des zeitweise feststehenden Dachteils (12) mit Bezug auf ein zumindest zeitweise feststehendes Dachteil (20) betätigt, **dadurch gekennzeichnet, dass** der Antriebsmotor (222) mittels eines Kabels (174) mit einem Mitnahmegleiter (114) verbunden ist, der mittels eines über Schrägflächen (170, 186) quer zur Verschieberichtung des Kabels (174) selbsttätig koppelbaren Riegelsteins (164) wechselweise mit einem mit dem öffnungsfähigenDachteil (30) verbundenen Gleiter (116) oder mit einer Aussparung (172) am zeitweise feststehenden Dachteil (12) koppelbar ist, so dass das öffnungsfähige Dachteil (30) in Öffnungsstellung im zeitweise feststehenden Dachteil (12) arretierbar ist.

2. Fahrzeugdach nach Anspruch 1, **dadurch gekennzeichnet, dass** der Antriebsmotor (222) ferner über einen weiteren mit dem Mitnahmegleiter (114) koppelbaren Riegelstein (156) die Arretierung des öffnungsfähigen Dachteils (30) gegenüber dem zumindest zeitweise feststehenden Dachteil (20) betätigt.

3. Fahrzeugdach nach einem der Ansprüche 1 bis 2, **dadurch gekennzeichnet, dass** der Antriebsmotor (222) am zeitweise feststehenden Dachteil (12) festgelegt ist.

4. Fahrzeugdach nach einem der vorhergehenden Ansprüche, **dadurch gekennzeichnet, dass** das zeitweise feststehende Dachteil (12) ein hinteres Dachteil ist.

5. Fahrzeugdach nach Anspruch 4, **dadurch gekennzeichnet, dass** das zumindesst zeitweise feststehende Dachteil seitliche hintere Säulen (20) des Fahrzeugs umfasst.

6. Fahrzeugdach nach Anspruch 4 oder 5, **dadurch gekennzeichnet, dass** das hintere Dachteil (12) nach seiner Entriegelung absenkbar ist.

7. Fahrzeugdach nach Anspruch 6, **dadurch gekennzeichnet, dass** das hintere Dachteil (12) über eine Viergelenkanordnung absenkbar ist.

8. Fahrzeugdach nach Anspruch 6 oder 7, **dadurch gekennzeichnet, dass** der Antriebsmotor (222) eine Arretierung des hinteren Dachteils (12) in abgesenkter Position und/oder eine Freigabe desselben aus der abgesenkten Position betätigt.

9. Fahrzeugdach nach einem der Ansprüche 4 bis 8, **dadurch gekennzeichnet, dass** an dem hinteren Dachteil (12) ein Heckteil (6) des Fahrzeugs (10) festgelegt ist, welches eine Heckscheibe (18) umfasst.

10. Fahrzeugdach nach einem der Ansprüche 4 bis 9, **dadurch gekennzeichnet, dass** an dem hinteren Dachteil (12) ein Heckteil (6) des Fahrzeugs (10) festgelegt ist, dessen Unterseite (7) nach oben klappbar ist.

11. Fahrzeugdach nach Anspruch 10, **dadurch gekennzeichnet, dass** die Unterseite (7) des Heckteils (6) an eine Hecktür (5) des Fahrzeugs (10) anlegbar ist.

12. Fahrzeugdach nach einem der Ansprüche 4 bis 11 **dadurch gekennzeichnet, dass** sich zwischen dem hinteren Dachteil (12) und einem oberhalb der Windschutzscheibe verlaufenden vorderen Querträger (2) zu beiden Seiten des öffnungsfähigen Dachteils (Faltdach 30) Seitenholme (28) erstrecken, die Führungen (Schienenabschnitt 26) umfassen, in denen das öffnungsfähige Dachteil (30) zwischen seiner Öffnungsstellung und seiner Schließstellung zumindest zum Teil verschiebbar aufgenommen ist.

13. Fahrzeugdach nach Anspruch 12, **dadurch gekennzeichnet, dass** die Seitenholme (28) lösbar mit dem vorderen Querträger (2) und seitlichen hinteren Säulen (20) des Fahrzeugs (10) verbunden sind.

14. Fahrzeugdach nach Anspruch 12 oder 13, **dadurch gekennzeichnet, dass** die Führungen (26) der Seitenholme (28) bei Verriegelung des hinteren Dachteils (12) an dem zumindest zeitweise feststehenden Dachteil (20) in Fluchtung mit Führungen (22) gebracht werden, die im hinteren Dachteil (12) zur verschiebbaren Aufnahme und Lagerung des öffnungsfähigen Dachteils (30) in Öffnungsstellung festgelegt sind.

15. Fahrzeugdach nach einem der vorhergehenden Ansprüche, **dadurch gekennzeichnet, dass** das öffnungsfähige Dachteil ein Faltdach (30) ist.

16. Fahrzeugdach nach einem der Ansprüche 1 bis 14, **dadurch gekennzeichnet, dass** das öffnungsfähige Dachteil ein Lamellendach ist.

## Claims

1. Vehicle roof having at least one roof part (30) that can be opened and can be actuated by a drive motor (222) and at least one temporarily fixed roof part (12) which supports the roof part (30) that can be opened in the open position of the latter, the drive motor (222) that drives the roof part that can be opened also at least indirectly actuating locking and/or unlocking of the temporarily fixed roof part (12) with respect to an at least temporarily fixed roof part (20), **characterized in that** the drive motor (222) is connected by means of a cable (174) to a drive slider (114) which, by means of a locking block (164) that can be coupled automatically transversely with respect to the displacement direction of the cable (174) via inclined surfaces (170, 186), can be coupled alternatively to a slider (116) connected to the roof part (30) that can be opened or to a cut-out (172) on the temporarily fixed roof part (12), so that the roof part (30) that can be opened can be locked in the open position in the temporarily fixed roof part (12).

2. Vehicle roof according to Claim 1, **characterized in that** the drive motor (222) further actuates the locking means of the roof part (30) that can be opened with respect to the at least temporarily fixed roof part (20) via a further locking block (156) that can be coupled to the drive slider (114).

3. Vehicle roof according to either of Claims 1 and 2, **characterized in that** the drive motor (222) is fixed to the temporarily fixed roof part (12).

4. Vehicle roof according to one of the preceding claims, **characterized in that** the temporarily fixed roof part (12) is a rear roof part.

5. Vehicle roof according to Claim 4, **characterized in that** the at least temporarily fixed roof part comprises rear side pillars (20) of the vehicle.

6. Vehicle roof according to Claim 4 or 5, **characterized in that** the rear roof part (12) can be lowered after it has been unlocked.

7. Vehicle roof according to Claim 6, **characterized in that** the rear roof part (12) can be lowered via a four-bar arrangement.

8. Vehicle roof according to Claim 6 or 7, **characterized in that** the drive motor (222) actuates locking of the rear roof part (12) in the lowered position and/or release of the same from its lowered position.

9. Vehicle roof according to one of Claims 4 to 8, **characterized in that** a rear part (6) of the vehicle (10), which comprises a rear window (18), is fixed to the rear roof part (12).

10. Vehicle roof according to one of Claims 4 to 9, **characterized in that** a rear part (6) of the vehicle (10), whose underside (7) can be folded upwards, is fixed to the rear roof part (12).

11. Vehicle roof according to Claim 10, **characterized in that** the underside (7) of the rear part (6) can be placed on a rear door (5) of the vehicle (10).

12. Vehicle roof according to one of Claims 4 to 11, **characterized in that**, between the rear roof part (12) and a front crossmember (2) running above the windscreen, on both sides of the roof part that can be opened (folding roof 30), there extend side members (28) which comprise guides (rail section 26), in which the roof part (30) that can be opened is accommodated such that it can be displaced, at least partly, between its open position and its closed position.

13. Vehicle roof according to Claim 12, **characterized in that** the side members (28) are detachably connected to the front crossmember (2) and rear side pillars (20) of the vehicle (10).

14. Vehicle roof according to Claim 12 or 13, **characterized in that**, as the rear roof part (12) is locked to the at least temporarily fixed roof part (20), the guides (26) of the side members (28) are brought into alignment with the guides (22) which are fixed in the rear roof part (12) for the displaceable accommodation and mounting of the roof part (30) that can be opened when in the open position.

15. Vehicle roof according to one of the preceding claims, **characterized in that** the roof part that can be opened is a folding roof (30).

16. Vehicle roof according to one of Claims 1 to 14, **characterized in that** the roof part that can be opened is a louvred roof.

## Revendications

1. Toit de véhicule, avec au moins une partie de toit ouvrant (30) pouvant être actionnée par un moteur d'entraînement (222) et au moins une partie de toit (12) temporairement fixe qui sert de support à la partie de toit ouvrant (30) dans la position ouverte de celle-ci, sachant que le moteur d'entraînement (222) entraînant la partie de toit ouvrant actionne également au moins indirectement un verrouillage et/ou un déverrouillage de la partie de toit (12) temporairement fixe par rapport à une partie de toit (20) au moins temporairement fixe,
**caractérisé en ce que** le moteur d'entraînement (222) est relié au moyen d'un câble (174) à un coulisseau entraîneur (114) qui, au moyen d'un coulisseau de verrouillage (164) automatiquement accouplable transversalement à la direction de coulissement du câble (174) via des faces biaises (170, 186), peut être alternativement accouplé à un coulisseau (116) relié à la partie de toit ouvrant (30) ou à un évidement (172) sur la partie de toit (12) temporairement fixe, de sorte que la partie de toit ouvrant (30) peut être bloquée en position ouverte dans la partie de toit (12) temporairement fixe.

2. Toit de véhicule selon la revendication 1, **caractérisé en ce que** le moteur d'entraînement (222) actionne en outre, par l'intermédiaire d'un autre coulisseau de verrouillage (156) accouplable au coulisseau entraîneur (114), le blocage de la partie de toit ouvrant (30) par rapport à la partie de toit (20) au moins temporairement fixe.

3. Toit de véhicule selon la revendication 1 ou 2, **caractérisé en ce que** le moteur d'entraînement (222) est fixé sur la partie de toit (12) temporairement fixe.

4. Toit de véhicule selon l'une des revendications précédentes, **caractérisé en ce que** la partie de toit (12) temporairement fixe est une partie de toit arrière.

5. Toit de véhicule selon la revendication 4, **caractérisé en ce que** la partie de toit au moins temporairement fixe comprend des montants arrière latéraux (20) du véhicule.

6. Toit de véhicule selon la revendication 4 ou 5, **caractérisé en ce que** la partie de toit arrière (12) peut être abaissée après avoir été déverrouillée.

7. Toit de véhicule selon la revendication 6, **caractérisé en ce que** la partie de toit arrière (12) peut être abaissée par l'intermédiaire d'un quadrilatère articulé.

8. Toit de véhicule selon la revendication 6 ou 7, **caractérisé en ce que** le moteur d'entraînement (222) actionne un blocage de la partie de toit arrière (12) en position abaissée et/ou une libération de celle-ci à partir de la position abaissée.

9. Toit de véhicule selon l'une des revendications 4 à 8, **caractérisé en ce qu'**une partie arrière (6) du véhicule (10), qui comprend une lunette arrière (18), est fixée sur la partie de toit arrière (12).

10. Toit de véhicule selon l'une des revendications 4 à 9, **caractérisé en ce qu'**une partie arrière (6) du véhicule (10), dont le côté inférieur (7) peut être rabattu vers le haut, est fixée sur la partie de toit arrière (12).

11. Toit de véhicule selon la revendication 10, **caractérisé en ce que** le côté inférieur (7) de la partie arrière (6) peut être appliqué contre une porte arrière (5) du véhicule (10).

12. Toit de véhicule selon l'une des revendications 4 à 11, **caractérisé en ce que** des longerons latéraux (28) s'étendent de part et d'autre de la partie de toit ouvrant (capote pliante 30) entre la partie de toit arrière (12) et une traverse avant (2) s'étendant au-dessus du pare-brise, longerons qui comprennent des guides (partie de rail 26) dans lesquels la partie de toit ouvrant (30) est reçue au moins pour partie à coulissement entre sa position ouverte et sa position fermée.

13. Toit de véhicule selon la revendication 12, **caractérisé en ce que** les longerons latéraux (28) sont reliés de manière amovible à la traverse avant (2) et à des montants arrière latéraux (20) du véhicule (10).

14. Toit de véhicule selon la revendication 12 ou 13, **caractérisé en ce que** les guides (26) des longerons latéraux (28) sont amenés, lors du verrouillage de la partie de toit arrière (12) sur la partie de toit (20) au moins temporairement fixe, en alignement avec des guides (22) qui sont fixés dans la partie de toit arrière (12) pour la réception et le montage à coulissement de la partie de toit ouvrant (30) en position ouverte.

15. Toit de véhicule selon l'une des revendications précédentes, **caractérisé en ce que** la partie de toit ouvrant est une capote pliante (30).

16. Toit de véhicule selon l'une des revendications 1 à 14, **caractérisé en ce que** la partie de toit ouvrant est un toit à lamelles.
